**Europäisches Patentamt**

**European Patent Office**

**Office européen des brevets**

(19)

(11) Veröffentlichungsnummer: **0 092 827**
**B1**

(12) **EUROPÄISCHE PATENTSCHRIFT**

(45) Veröffentlichungstag der Patentschrift:
**20.11.86**

(21) Anmeldenummer: **83104018.3**

(22) Anmeldetag: **24.04.83**

(51) Int. Cl.⁴: **G 01 L 7/02, F 16 L 55/04**

(54) Drucküberwachungsgerät zum Einbau in eine Rohr- oder Schlauchleitung.

(30) Priorität: **23.04.82 DE 3215222**

(43) Veröffentlichungstag der Anmeldung:
**02.11.83 Patentblatt 83/44**

(45) Bekanntmachung des Hinweises auf die Patenterteilung:
**20.11.86 Patentblatt 86/47**

(84) Benannte Vertragsstaaten:
**AT BE CH FR GB IT LI NL SE**

(56) Entgegenhaltungen:
**DE - A - 2 117 105**
**US - A - 2 871 884**

**MACHINE DESIGN, Band 36, Nr. 19, 13. August 1964, Seite 133, Cleveland, US; "Sensing blanket isolates fluid"**

(73) Patentinhaber: **Melchior, Martin Theodor, Neustrasse 50, D-6639 Rehlingen/Saar (DE)**

(72) Erfinder: **Melchior, Martin Theodor, Neustrasse 50, D-6639 Rehlingen/Saar (DE)**

(74) Vertreter: **Boecker, Carl Otto, Dipl.-Ing., Dr. Ehrhardt-Strasse 31, D-6670 St. Ingbert (Saar) (DE)**

## Beschreibung

Die Erfindung betriff ein Drucküberwachungsgerät zum Einbau in eine Rohr- oder Schlauchleitung, wie sie insbesondere als Mörteldruckprüfer zur Überwachung des Druckes in strömendem Mörtel oder Gips verwendet werden, die vor sogenannten Anwurfgeräten in der Zuführleitung angeordnet sind. Derartige Drucküberwachungsgeräte bestehen aus einem rohrförmigen Druckgehäuse mit einem eine eingesetzte rohrförmige Membran aus elastischem Werkstoff umgebenden Druckraum, an den ein Druckmessgerät angeschlossen ist, wobei die rohrförmige Membran an den Enden unter Aufweitung durch je einen Aussenkonus eines durch Axialkraft eingetriebenen und gesicherten Anschlussnippels gegenüber dem Druckgehäuse eingespannt ist. Da der nicht eingespannte mittlere Bereich der rohrförmigen Membran sich unter dem Innendruck des durchfliessenden Mediums in den Druckraum aufweiten kann, kann der damit verbundene Druckanstieg im Druckraum gemessen werden, sei es durch ein radial angesetztes Manometer oder durch ein ortsfestes Messgerät, das über eine Schlauchleitung mit dem Druckraum verbunden ist.

Nach dem Stand der Technik werden die Anschlussnippel mittels Überwurfmuttern in die Enden der rohrförmigen elastischen Membran eingetrieben und in ihrer axialen Lage gesichert. Dieser Aufbau des Gerätes erfordert ausser zwei Überwurfmuttern je ein Aussengewinde an dem Druckgehäuse. Die Verwendung derartiger gebräuchlicher Rohr- oder Schlauchverschraubungen hat zwar den Vorteil, dass die Verbindungen leicht gelöst werden können, jedoch spielt dieser Gesichtspunkt angesichts der Langlebigkeit von Drucküberwachungsgeräten der beschriebenen Art eine untergeordnete Rolle. Es wurde daher die Aufgabe gestellt, die Herstellungskosten für ein Drucküberwachungsgerät der eingangs beschriebenen Art durch Einsparung von teuren Gewindeteilen zu senken.

Die Lösung dieser Aufgabe besteht gemäss der Erfindung darin, dass die durch diametral gegeneinander gerichtete Axialkräfte eingetriebenen Anschlussnippel schraubenlos durch einen Flansch der Anschlussnippel übergreifende und am Druckgehäuse sich abstützende Anschläge axial gesichert sind. Diese gegeneinander gerichteten Axialkräfte, die nach dem Stand der Technik durch die Überwurfmuttern selbst hervorgerufen wurden, werden nunmehr durch eine Spannvorrichtung in der Werkstatt aufgebracht, wodurch die Überwurfmuttern überflüssig werden. Die zur axialen Sicherung der eingetriebenen Anschlussnippel erforderlichen Anschläge bestehen zweckmässig aus Seegerringen, die in Innennuten des Druckgehäuses eingesetzt werden. Ein anderes Ausführungsbeispiel besteht darin, dass das Druckgehäuse kein Gussteil ist, sondern aus einem durch Drücken umgeformten Stahlrohr besteht, dessen Enden zu Anschlägen nach innen umgebördelt sind. Diese Axialsicherung für die Anschlussnippel ist nicht mehr demontierbar.

In der Zeichnung sind in einer einzigen Abbildung zwei Ausführungsbeispiele der Erfindung dargestellt, und zwar zeigen

Fig. 1 die rechte Hälfte eines Drucküberwachungsgerätes mit Axialsicherung durch Seegerring und

Fig. 2 die linke Hälfte eines ebensolchen Gerätes mit Axialsicherung durch Umbördelung.

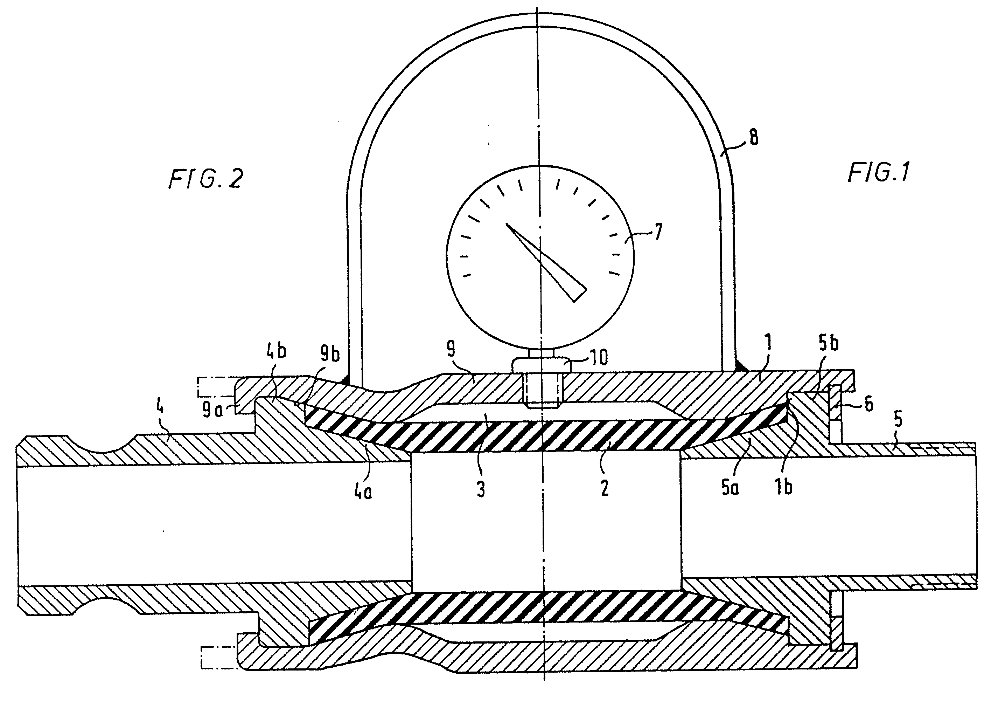

Bei beiden Ausführungsbeispielen ist Hauptbestandteil des Drucküberwachungsgerätes ein rohrförmiges Druckgehäuse 1 bzw. 9 mit einer eingesetzten rohrförmigen Membran 2 aus Gummi oder einem anderen elastischen Werkstoff, wobei das Druckgehäuse so gestaltet ist, dass zwischen dem mittleren Bereich der Membran 2 und dem Druckgehäuse ein ringförmiger Druckraum 3 entsteht. Die rohrförmige Membran 2 ist an beiden Enden durch die Aussenkonusse 4a bzw. 5a von Anschlussnippeln 4 bzw. 5 eingespannt und abgedichtet. Im Ausführungsbeispiel nach Fig. 1 haben die Anschlussnippel 5 (und auch 4) Flansche 5b, die unter diametral gegeneinandergerichteten Axialkräften einer nicht dargestellten Spannvorrichtung unter Aufweiten der Gummimembran 2 bis gegen einen Ringbund 1b des Druckgehäuses 1 eingetrieben werden. Die axiale Lage der Anschlussnippel wird daraufhin durch je einen Seegerring 6 als Axialanschlag gesichert.

Beim Ausführungsbeispiel nach Fig. 2 besteht das Druckgehäuse 9 aus einem durch Drücken umgeformten Stahlrohr, dessen strichpunktiert dargestellte Enden als Axialsicherung in die Position 9a umgebördelt werden, wenn die Flansche 4b der Anschlussnippel 4 (und auch 5) mit Schrägflächen unter den diametral gerichteten Axialkräften an Schrägflächen 9b des Druckgehäuses 9 Anschlag gefunden haben.

Bei beiden Ausführungsbeispielen ist über ein Schraubnippel 10 ein Manometer 7 an den Druckraum 3 angeschlossen und durch einen Stahlbügel 8 gegen Beschädigungen geschützt.

## Patentansprüche

1. Drucküberwachungsgerät zum Einbau in eine Rohr- oder Schlauchleitung, bestehend aus einem rohrförmigen Druckgehäuse (1 bzw. 9) mit einem eine eingesetzte rohrförmige Membran (2) aus elastischem Werkstoff umgebenden Druckraum, an den ein Druckmessgerät angeschlossen ist, wobei die rohrförmige Membran (2) an den Enden unter Aufweitung durch je einen Aussenkonus (4a bzw. 5a) eines durch Axialkraft eingetriebenen und gesicherten Anschlussnippels (4 bzw. 5) gegenüber dem Druckgehäuse eingespannt ist, dadurch gekennzeichnet, dass die durch diametral gegeneinander gerichtete Axialkräfte eingetriebenen Anschlussnippel (4, 5) schraubenlos durch einen Flansch (4b, 5b) der Anschlussnippel übergreifende und am Druckgehäuse (1 bzw. 9) sich abstützende Anschläge (6 bzw. 9a) axial gesichert sind.

2. Drucküberwachungsgerät nach Anspruch 1, dadurch gekennzeichnet, dass die Anschläge aus Seegerringen (6) bestehen.

3. Drucküberwachungsgerät nach Anspruch 1, dadurch gekennzeichnet, dass das rohrförmige Druckgehäuse (9) aus einem durch Drücken umgeformten Stahlrohr besteht, dessen Enden zu Anschlägen (9a) nach innen umgebördelt sind.

## Claims

1. A pressure monitoring device for incorporation in a pipe or hose, consisting of a tubular pressure encasement (1, 9) with a pressure chamber surrounding an inserted tubular diaphragm (2) of elastic material, the pressure chamber being connected to a pressure gauge, the ends of the tubular diaphragm (2) being clamped to open out against the pressure encasement by means of external cones (4a, 5a) provided on connecting nipples (4, 5) which are driven into place and secured by an axial force, characterized in that the connecting nipples (4, 5) driven into place by the diametrally opposed axial forces are boltlessly secured axially by means of shoulders (6, 9a) lapping over a flange (4b, 5b) provided on the connecting nipples and backing up against the pressure encasement (1, 9).

2. A pressure monitoring device according to Claim 1, characterized in that the shoulders consist of Seeger circlip rings (6).

3. A pressure monitoring device according to Claim 1, characterized in that the tubular pressure encasement (9) consists of a steel tube reshaped by pressure application, the ends of which are flanged inwardly to form shoulders (9a).

## Revendications

1. Dispositif de surveillance de pression destiné à être monté dans une canalisation tubulaire ou un flexible, constitué par une enceinte sous pression tubulaire (1, 9) avec un espace sous pression enveloppant une membrane tubulaire (2) en matériau élastique, l'espace sous pression étant relié à un appareil de mesure de pression (2) tandis que la membrane tubulaire (2) est plaquée contre l'enceinte sous pression, à chacune de ses extrémités, sous l'effet de l'expansion, par un cône extérieur (4a, 5a), d'un raccord enfoncé et bloqué sous l'effet de la force axiale, caractérisé en ce que que les raccords (4, 5), enfoncés par des forces axiales diamétralement opposées, sont maintenus axialement sans filetage par des épaulements (6, 9a) enveloppant une bride (4b, 5b) des raccords et s'appuyant sur l'enceinte sous pression (1, 9).

2. Dispositif de surveillance de pression suivant la revendication 1 caractérisé en ce que les épaulements sont constitués d'anneaux du type Seeger (6).

3. Dispositif suivant la revendication 1 caractérisé en ce que l'enceinte sous pression (9) tubulaire est constituée par un tube d'acier obtenu par formage sous pression, dont les extrémités sont serties vers l'intérieur en formant des épaulements (9a).

FIG.2                                                    FIG.1